# EUROPEAN PATENT APPLICATION

(11) **EP 4 803 269 A1**
(43) Date of publication of application: **09.09.2026**
(21) Application number: 26156774.7
(22) Date of filing: 06.02.2026
(51) Int. Cl.: B25J 9/16, B25J 9/00, B25J 9/06, B25J 9/10, B25J 18/06

(54) **SYSTEM AND METHOD FOR CORRECTING A MEASURED POSITION OF A CONTINUUM ROBOT WHILST INSPECTING OR REPAIRING A COMPONENT**

(30) Priority: 07.03.2025 GB 202503317
(71) Applicant: Rolls-Royce plc, London N1 9FX (GB)
(72) Inventor: Norton, Andrew, Derby, DE24 8BJ (GB); Wild, Samuel, Derby, DE24 8BJ (GB); Dong, Xin, Derby, DE24 8BJ (GB)
(74) Representative: Rolls-Royce plc

(57) **Abstract**

A system (100) for correcting a measured position of a continuum robot (102) whilst inspecting or repairing a component (104) includes at least one first sensor (106) coupled to the continuum robot (102). The at least one first sensor (106) is configured to generate information related to an orientation of the at least one first sensor (106) relative to a reference point (124) on the continuum robot (102). The system (100) further includes at least one second sensor (108) associated with the continuum robot (102). The at least one second sensor (108) is configured to generate information related to a change in a length of the continuum robot (102). The system (100) further includes a controller (110) that determines a parasitic twist (*τₜₒₜₐₗ*) in the continuum robot (102) and corrects the measured position of the continuum robot (102) based on the determined parasitic twist (*τₜₒₜₐₗ*) in the continuum robot (102).

## Description

### FIELD

This invention relates to a system for correcting a measured position of a continuum robot whilst inspecting or repairing a component. This invention further relates to a method of correcting the measured position of the continuum robot whilst inspecting or repairing the component.

### BACKGROUND

Continuum robots (CR) have emerged as versatile systems capable of intricate maneuvers and operations in complex environments including on-wing (in situ) inspection and repair of components, such as those associated with gas turbine engines. Such CRs are typically tendon driven. The aforesaid snake-like robots can contort to navigate obstacle-ridden environments. However, it is difficult to establish precise sensing and control of the CRs that is essential for industrial adoption. For example, due to lack of accuracy in determination of a position of the CRs during an inspection or the repair operation, reliable in-situ closed-loop control of CRs is challenging which may hinder their widespread adoption. A common challenge in CRs is parasitic twist that is an unintended axial rotation caused by many factors, including: asymmetrical actuation of tendons, or routing and/or kinematics of the CRs. The parasitic twist can degrade a positional accuracy and complicate control algorithms of the CRs. Conventional methods of determining the parasitic twist involve complex models or empirical adjustments that may not fully capture effects of tendon placement and tension.

Thus, there exists a need for a system and a method for determining parasitic twist and correcting effects of the parasitic twist on a position of the CRs during inspecting or repairing of components.

### SUMMARY

In a first aspect, there is provided a system for correcting a measured position of a continuum robot whilst inspecting or repairing a component. The system includes at least one first sensor coupled to the continuum robot. The at least one first sensor is configured to generate information related to an orientation of the at least one first sensor relative to a reference point on the continuum robot. The system further includes at least one second sensor associated with the continuum robot. The at least one second sensor is configured to generate information related to a change in a length of the continuum robot. The system further includes a controller communicably coupled with the at least one first sensor and the at least one second sensor. The controller is configured to receive, from the at least one first sensor, the orientation of the at least one first sensor relative to the reference point on the continuum robot. The controller is further configured to receive, from the at least one second sensor, the change in the length of the continuum robot. The controller is further configured to determine a parasitic twist in one or more portions of the continuum robot based on, at least in part, the orientation of the at least one first sensor and the change in the length of the continuum robot. The controller is further configured to correct the measured position of the continuum robot based on the determined parasitic twist in the one or more portions of the continuum robot.

The system is used to correct the measured position of the continuum robot based on analytical determination of the parasitic twist in the one or more portions of the continuum robot based on the change in the length of the continuum robot and the change in an orientation of the first sensor. The system determines the parasitic twist and corrects the measured position of the continuum robot without the need of a complex, or data-driven method, thereby enabling repeatability and robustness. The system may be used for tendon-driven continuum robots that are subjected to parasitic twist during the repair or inspection of the component. The system may also be used for active continuum robots possessing no random passive section, such as Continuum Robot for Flexible Operations (COBRA) robot. The system may operate in real-time during the repair or inspection of the component and may allow monitoring and optimizing of the repair operation being performed on the component, such as those associated with gas turbine engines.

In some embodiments, the controller is further configured to analytically correct the orientation of the at least one first sensor based on the determined parasitic twist in the one or more portions of the continuum robot. Correcting the orientation of the at least one first sensor may allow accurate control of the position of the continuum robot during the repair or inspection of the component.

In some embodiments, the orientation of the at least one first sensor includes a position of the at least one first sensor along each of an X-axis, a Y-axis, and a Z-axis defined by the continuum robot. This may allow accurate determination of the orientation of the at least one first sensor relative to the reference point on the continuum robot. Further, the position of the at least one first sensor along each of an X-axis, a Y-axis, and a Z-axis may be used to conclude a shape of the continuum robot at a given time instant.

In some embodiments, the controller is further configured to determine a position of a tip of the continuum robot based on, at least in part, the orientation of the at least one first sensor. Since a point of execution of various applications is the tip (or an end effector) of the continuum robot, the determination of the position of the tip is crucial during the repair or inspection of the component, which may in turn allow improved control of the continuum robot.

In some embodiments, the determined parasitic twist includes a combination of a kinematic twist and a torsional twist. Consideration of each of the kinematic twist and the torsional twist may aid in accurate determination of the parasitic twist in the one or more portions of the continuum robot.

In some embodiments, the at least one first sensor includes a Fibre Bragg grating (FBG) sensor. The FBG sensor may be used for enhanced proprioception of continuum robots because of their small diameter, flexibility, and immunity to electromagnetic interference, thereby enabling accurate determination of the orientation of the at least one first sensor relative to the reference point.

In some embodiments, the at least one first sensor includes a plurality of first sensors. The plurality of first sensors are axially spaced apart from each other along a length of the continuum robot. The plurality of first sensors may be used to determine the parasitic twists at different locations along the continuum robot.

In some embodiments, each of the plurality of first sensors includes an inertial measurement unit. The inertial measurement unit may replace the FBG sensor, or the continuum robot may include the inertial measurement units as well as the FBG sensor.

In some embodiments, the at least one second sensor includes a linear encoder or a load cell. Alternatively, the at least one second sensor may include any other type of sensor that provides information related to the change in the length of the continuum robot.

In some embodiments, the at least one second sensor is coupled to a drive system of the continuum robot. The at least one second sensor determines the change in the length of the continuum robot based on variations in the forces provided by the drive system to the continuum robot.

In some embodiments, the continuum robot includes a backbone having a plurality of vertebrae and a plurality of tendons circumferentially arranged around the backbone at various angular positions. The at least one first sensor is disposed proximal to the backbone of the continuum robot. Thus, the system of the present invention may be used to determine the parasitic twist and to correct the measured position of different types of tendon driven robots.

In some embodiments, the controller is further configured to determine the parasitic twist in the one or more portions of the continuum robot based on, at least in part, a stiffness coefficient of the plurality of tendons, a radial distance of the plurality of tendons from the backbone, a torsional rigidity of the plurality of tendons, an angular position of the plurality of tendons, and a total number of the plurality of tendons. Determination of the parasitic twist using the orientation of the first sensor, the change in a length of the continuum robot, and the aforesaid parameters may generate accurate and reliable results for the parasitic twist.

In some embodiments, the reference point is defined at the backbone of the continuum robot.

In some embodiments, the component is a gas turbine engine component. The system may be used to inspect or repair various components associated with the gas turbine engine or any other machinery that have complex geometry and are difficult to access.

In a second aspect, there is provided a method of correcting a measured position of a continuum robot whilst inspecting or repairing a component. The method includes a step of generating, by at least one first sensor coupled to the continuum robot, information related to an orientation of the at least one first sensor relative to a reference point on the continuum robot. The method further includes a step of generating, by at least one second sensor associated with the continuum robot, information related to a change in a length of the continuum robot. The method further includes a step of receiving, from the at least one first sensor, the orientation of the at least one first sensor relative to the reference point on the continuum robot. The method further includes a step of receiving, from the at least one second sensor, the change in the length of the continuum robot. The method further includes a step of determining a parasitic twist in one or more portions of the continuum robot based on, at least in part, the orientation of the at least one first sensor and the change in the length of the continuum robot. The method further includes a step of correcting the measured position of the continuum robot based on the determined parasitic twist in the one or more portions of the continuum robot.

The method is used to correct the measured position of the continuum robot based on analytical determination of the parasitic twist in the one or more portions of the continuum robot based on the change in the length of the continuum robot and the change in an orientation of the first sensor. The method determines the parasitic twist and corrects the measured position of the continuum robot without the need of a complex, or data-driven method, thereby enabling repeatability and robustness. The method may be used for tendon-driven continuum robots that are subjected to parasitic twist during the repair or inspection of the component. The method may also be used for active continuum robots possessing no random passive section, such as Continuum Robot for Flexible Operations (COBRA) robot. The method may operate in real-time during the repair or inspection of the component and may allow monitoring and optimizing of the repair operation being performed on the component, such as those associated with gas turbine engines.

In some embodiments, the method further includes the step of analytically correcting the orientation of the at least one first sensor based on the determined parasitic twist in the one or more portions of the continuum robot. Correcting the orientation of the at least one first sensor may allow accurate control of the position of the continuum robot during the repair or inspection of the component.

In some embodiments, the method further includes the step of determining the position of the tip of the continuum robot based on, at least in part, the orientation of the at least one first sensor. Since a point of execution of various applications is the tip (or an end effector) of the continuum robot, the determination of the position of the tip is crucial during the repair or inspection of the component, which may in turn allow improved control of the continuum robot.

In some embodiments, the at least one first sensor includes a Fibre Bragg grating (FBG) sensor or an inertial measurement unit. The FBG sensor may be used for enhanced proprioception of continuum robots because of their small diameter, flexibility, and immunity to electromagnetic interference, thereby enabling accurate determination of the orientation of the at least one first sensor relative to the reference point. In some examples, the inertial measurement unit may replace the FBG sensor, or the continuum robot may include the inertial measurement units as well as the FBG sensor.

In some embodiments, the determined parasitic twist includes the combination of the kinematic twist and the torsional twist. Consideration of each of the kinematic twist and the torsional twist may aid in accurate determination of the parasitic twist in the one or more portions of the continuum robot.

In some embodiments, the continuum robot includes a backbone having a plurality of vertebrae and a plurality of tendons circumferentially arranged around the backbone at various angular positions. The at least one first sensor is disposed proximal to the backbone of the continuum robot. The method further includes determining the parasitic twist in the one or more portions of the continuum robot based on, at least in part, a stiffness coefficient k of the plurality of tendons, a radial distance of the plurality of tendons from the backbone, a torsional rigidity of the plurality of tendons, an angular position of the plurality of tendons, and a total number of the plurality of tendons. Thus, the method of the present invention may be used to determine the parasitic twist and to correct the measured position of different types of tendon driven robots. Further, determination of the parasitic twist using the orientation of the first sensor, the change in the length of the continuum robot, and the aforesaid parameters may generate accurate and reliable results for the parasitic twist.

The details of one or more examples of the invention are set forth in the accompanying drawings and the description below. Other features, objects, and advantages of the invention will be apparent from the description and drawings, and from the claims.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
**FIG. 1** shows a sectional side view of a gas turbine engine;
**FIG. 2** shows a schematic side view of a continuum robot whilst inspecting or repairing a component of the gas turbine engine of FIG. 1;
**FIG. 3** shows a schematic side view of the continuum robot of FIG. 2;
**FIG. 4** shows a block diagram of a system for correcting a measured position of the continuum robot of FIG. 2 whilst inspecting or repairing the component of the gas turbine engine of FIG. 1, in accordance with an embodiment of the present invention; and
**FIG. 5** shows a flowchart depicting various steps of a method of correcting the measured position of the continuum robot whilst inspecting or repairing the component, in accordance with an embodiment of the present invention.

### DETAILED DESCRIPTION

Aspects and embodiments of the present invention will now be discussed with reference to the accompanying figures. Further aspects and embodiments will be apparent to those skilled in the art.

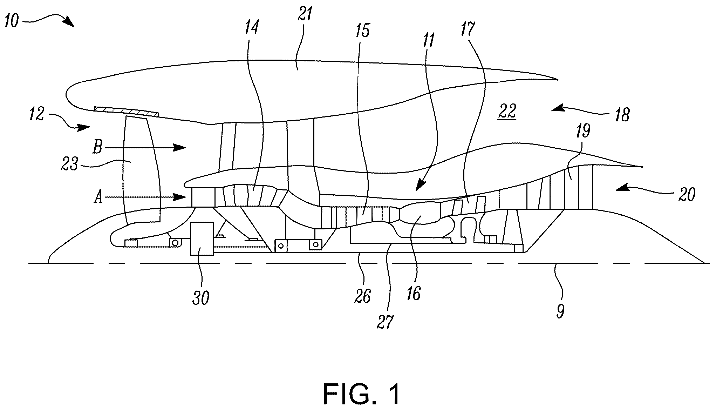

**FIG. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present invention may be applied may have alternative configurations. For example, such engines may have an alternative number of compressors and/or turbines and/or an alternative number of interconnecting shafts. By way of further example, the gas turbine engine 10 shown in Figure 1 has a split flow nozzle 18, 20 meaning that the flow through the bypass duct 22 has its own nozzle 18 that is separate to and radially outside the core exhaust nozzle 20. However, this is not limiting, and any aspect of the present invention may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the invention may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial, and circumferential directions are mutually perpendicular.

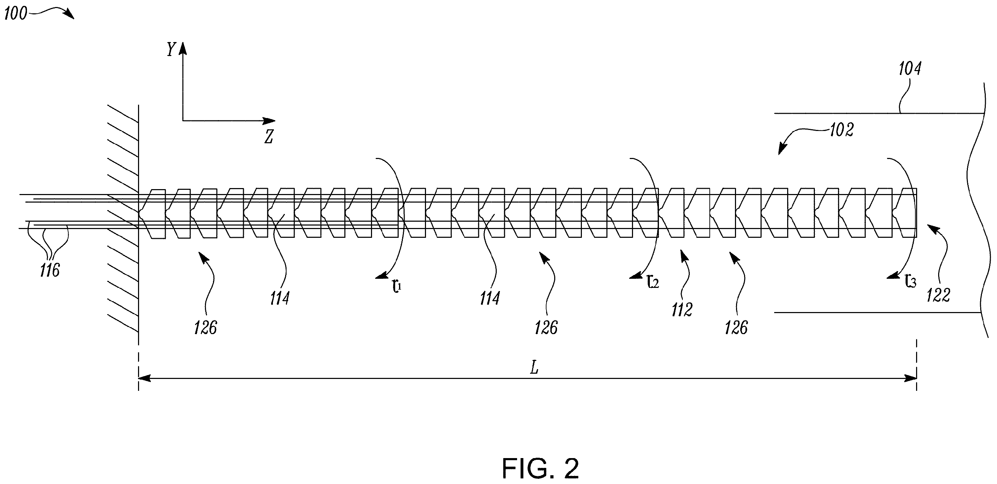

**FIG. 2** shows a schematic side view of a continuum robot 102 whilst inspecting or repairing a component 104. In some embodiments, the component 104 is a gas turbine engine component 104. The component 104 is hereinafter interchangeably referred to as "the gas turbine engine component104". The component 104 may be the turbine 17, 19 (see FIG. 1), the compressor 14, 15 (see FIG. 1), the combustion equipment 16 (see FIG. 1), and the like.

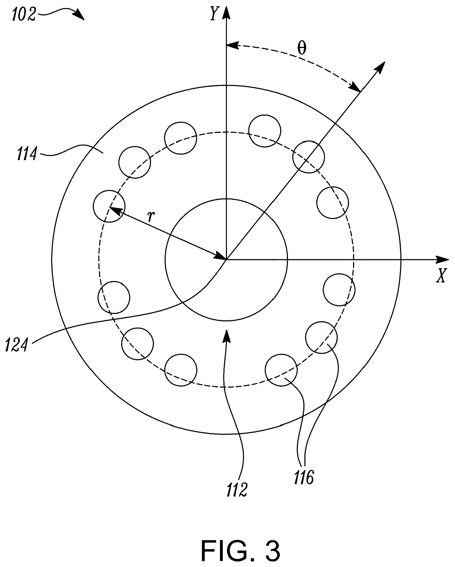

**FIG. 3** shows a schematic side view of the continuum robot 102.

Referring to FIGS. 2 and 3, in the embodiment shown, the continuum robot 102 includes a backbone 112 having a plurality of vertebrae 114 and a plurality of tendons 116 circumferentially arranged around the backbone 112 at various angular positions θ. For example, the continuum robot 102 may include the backbone 112 having thirty vertebrae 114 axially arranged along a length L of the continuum robot and twelve tendons 116 circumferentially arranged around the backbone 112 at the various angular positions θ. The tendons 116 may be disposed equidistantly/non-uniformly around the backbone 112 or the tendons 116 may be disposed at different radial distances r from the backbone 112.

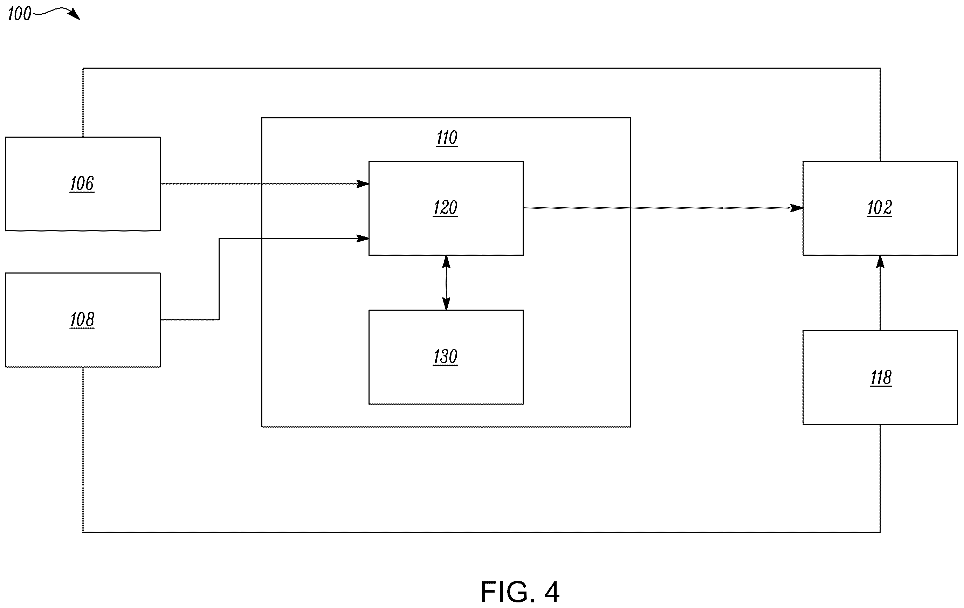

Further, a drive system 118 (shown in FIG. 4) is operatively coupled with the continuum robot 102. The drive system 118 of the continuum robot 102 may include a motor or a servo. The drive system 118 causes the continuum robot 102 to move during the inspection or the repair of the component 104.

**FIG. 4** shows a block diagram of a system 100 for correcting a measured position of the continuum robot of FIGS. 2 and 3, in accordance with an embodiment of the present invention. The system 100 may be used to inspect or repair various components 104 associated with the gas turbine engine 10 that have a complex geometry and are difficult to access. The system 100 may also be used to inspect or repair various components associated with any other machinery.

Referring to FIGS. 2 to 4, the system 100 includes at least one first sensor 106 coupled to the continuum robot 102. In some embodiments, the at least one first sensor 106 is disposed proximal to the backbone 112 of the continuum robot 102. In some embodiments, the at least one first sensor 106 is disposed on the backbone 112 of the continuum robot 102.

The at least one first sensor 106 is configured to generate information related to an orientation of the at least one first sensor 106 relative to a reference point 124 on the continuum robot 102. In some embodiments, the orientation of the at least one first sensor 106 includes a position of the at least one first sensor 106 along each of an X-axis, a Y-axis, and a Z-axis defined by the continuum robot 102. In some embodiments, the reference point 124 is defined at the backbone 112 of the continuum robot 102.

The information related to the orientation of the at least one first sensor 106 relative to the reference point 124 on the continuum robot 102 may provide for a shape of the at least one first sensor 106. This may allow accurate determination of the orientation of the at least one first sensor 106 relative to the reference point 124 on the continuum robot 102. Further, the position of the at least one first sensor 106 along each of the X-axis, the Y-axis, and the Z-axis may be used to conclude a shape of the continuum robot 102 at a given time instant.

In some embodiments, the at least one first sensor 106 includes a Fibre Bragg grating (FBG) sensor. The FBG sensor includes an optical fibre. The optical fibre has at least a fibre Bragg grating (FBG) positioned at a joint within the continuum robot 102. If a bundle of fibres have been used, a FBG may be present at a point corresponding to joint positions. A FBG is a length of optical fibre that has a distributed Bragg reflector constructed within a short segment of it. The Bragg reflector allows certain wavelengths to pass and others to be reflected. The optical fibres can be single, multicore, or multiple core fibres. The FBG sensor can be used to determine the shape of the continuum robot based on a strain and a curvature of each grating. As light passes through the optical fibre, it is reflected at each grating at a specific wavelength called the Bragg wavelength. The shift in the Bragg wavelengths can be used to calculate the curvature, and a series of curvatures can then be used to determine the orientation and the shape of the at least one first sensor 106, which may in turn be used to determine the orientation and the shape of the continuum robot 102.

The FBG sensor may be used for enhanced proprioception of continuum robots 102 because of their small diameter, flexibility, and immunity to electromagnetic interference, thereby enabling accurate determination of the orientation of the at least one first sensor 106 relative to the reference point 124.

In some embodiments, the at least one first sensor 106 includes a plurality of first sensors 106. The plurality of first sensors 106 are axially spaced apart from each other along the length L (see FIG. 2) of the continuum robot 102. The plurality of first sensors 106 may be used to determine the parasitic twists *τₜₒₜₐₗ* at different locations along the continuum robot 102.

In some embodiments, each of the plurality of first sensors 106 includes an inertial measurement unit (IMU). The IMU continuously records acceleration, angular velocity, and magnetic field data. The data may undergo preprocessing and filtering to generate real time information related to the orientation of the at least one first sensor 106. In some examples, the IMU may replace FBG sensor, or the continuum robot 102 may include the IMUs as well as the FBG sensor.

The system 100 further includes at least one second sensor 108 associated with the continuum robot 102. In some embodiments, the at least one second sensor 108 is coupled to the drive system 118 of the continuum robot 102. The at least one second sensor 108 is configured to generate information related to a change in the length L of the continuum robot 102. During the inspection or the repair of the component 104, the length L of the continuum robot 102 may change continuously or intermittently. Specifically, as the continuum robot 102 is a flexible robot, the length L of the continuum robot 102 varies as the continuum robot 102 moves through spaces. The change in the length L may be determined based on an original length L of the continuum robot and/or based on a previous noted length L of the continuum robot 102.

In some embodiments, the change in the length L may include the changes in lengths of the continuum robot 102 along the Z-axis.

In some embodiments, the at least one second sensor 108 includes a linear encoder or a load cell. The linear encoder measures the change in the length L of the continuum robot 102 using optical, magnetic, capacitive, or inductive sensing sensors. The load cell detects variations in tensile or compressive forces on the continuum robot 102 during the inspection or the repair of the component 104 via communication with the drive system 118. The aforesaid forces are correlated with the change in the length L of the continuum robot 102 using material properties (such as via Hooke's Law) and kinematic models. Alternatively, the at least one second sensor 108 may include any other type of sensor that provides information related to the change in the length L of the continuum robot 102.

The system 100 further includes a controller 110 communicably coupled with the continuum robot 102, the at least one first sensor 106, and the at least one second sensor 108.

The controller 110 is a device including hardware, software, or a combination of both along with memory 130. The controller 110 receives data and processes via processors 120, to manage the inspection or the repairing of the component 104. The controller 110 includes one or more processors 120 and one or more memories 130 in communication with the one or more processors 120. In some examples, the memories 130 may include a random access memory (RAM), such as synchronous dynamic random access memory (SDRAM), a read-only memory (ROM), a non-volatile random access memory (NVRAM), an electrically erasable programmable read-only memory (EEPROM), a FLASH memory, a magnetic or optical data storage media, and the like, that can be used to store various information or desired program codes in the form of instructions or data structures and that can be accessed by the processors 120.

Further, the processors 120 may execute various types of digitally stored instructions, such as software applications or algorithms, retrieved from the memories 130, or a firmware program which may enable the processors 120 to perform a wide variety of operations. It should be noted that the processors 120 may embody a single microprocessor or multiple microprocessors for receiving various input signals and generating output signals. Numerous commercially available microprocessors may perform the functions of the processors 120. Each of the processors 120 may further include a general processor, a central processing unit, an application specific integrated circuit (ASIC), a digital signal processor, a field programmable gate array (FPGA), a digital circuit, an analog circuit, a microcontroller, any other type of processor, or any combination thereof. Each of the processors 120 may include one or more elements that may be operable to execute computer executable instructions or computer code that may be stored and retrieved from the memories 130.

The controller 110 is configured to receive, from the at least one first sensor 106, the orientation of the at least one first sensor 106 relative to the reference point 124 on the continuum robot 102. For example, the controller 110 is configured to receive, from the at least one first sensor 106, the position of the at least one first sensor 106 along each of the X-axis, the Y-axis, and the Z-axis defined by the continuum robot 102 relative to the reference point 124 defined at the backbone 112 of the continuum robot 102.

In some embodiments, the controller 110 is further configured to determine a position of a tip 122 the continuum robot 102 based on, at least in part, the orientation of the at least one first sensor 106. The position of the tip 122 of the continuum robot 102 may be determined based upon the orientation of the at least one first sensor 106, and a position of the reference point 124 of the continuum robot 102 relative to the tip 122 along each of the X-axis, the Y-axis, and the Z-axis. The position of the reference point 124 of the continuum robot 102 relative to the tip 122 may be prestored in the memories 130 of the controller 110.

The controller 110 is further configured to receive, from the at least one second sensor 108, the change in the length L of the continuum robot 102. The change in the length L of the continuum robot 102 may be computed based on the original length L of the continuum robot 102 and/or based on the previous noted length L of the continuum robot 102, and the data received from the second sensor 108. In an example, the original length L and the previous noted length L of the continuum robot 102 may be prestored in the memories 130 of the processors 120 at each step of the repair or inspection.

Since a point of execution of various applications is the tip 122 (or an end effector) of the continuum robot 102, the determination of the position of the tip 122 is crucial during the repair or inspection of the component 104 which may in turn allow improved control of the continuum robot 102.

The system 100 of the present invention may be used to determine the parasitic twist *τₜₒₜₐₗ* and to correct the measured position of different types of tendon driven robots.

The controller 110 is further configured to determine the parasitic twist *τₜₒₜₐₗ* in one or more portions 126 of the continuum robot 102 based on, at least in part, the orientation of the at least one first sensor 106 and the change in the length L of the continuum robot 102.

The information related to the orientation of the at least one first sensor 106 and the change in the length L of the continuum robot 102 may aid the controller 110 in accurate determination of the parasitic twist *τₜₒₜₐₗ* in the one or more portions 126 of the continuum robot 102.

In some embodiments, the controller 110 is further configured to determine the parasitic twist *τₜₒₜₐₗ* in the one or more portions 126 of the continuum robot 102 based on, at least in part, a stiffness coefficient k of the plurality of tendons 116, the radial distance r of the plurality of tendons 116 from the backbone 112, a torsional rigidity GJ of the plurality of tendons 116, the angular position θ of the plurality of tendons 116, and a total number n of the plurality of tendons 116. Determination of the parasitic twist *τₜₒₜₐₗ* using the orientation of the first sensor 106, the change in the length L of the continuum robot 102, and the aforesaid parameters may generate accurate and reliable results for the parasitic twist *τₜₒₜₐₗ.*

In some embodiments, the controller 110 is further configured to analytically correct the orientation of the at least one first sensor 106 based on the determined parasitic twist *τₜₒₜₐₗ* in the one or more portions 126 of the continuum robot 102. Correcting the orientation of the at least one first sensor 106 may allow accurate control of the position of the continuum robot 102 during the repair or inspection of the component 104.

In some embodiments, the one or more portions 126 of the continuum robot 102 may include a single vertebra 114 or multiple vertebrae 114.

In some embodiments, the determined parasitic twist *τₜₒₜₐₗ* includes a combination of a kinematic twist τ_{kinematic} and a torsion twist τₜₒᵣₛᵢₒₙ. Consideration of each of the kinematic twist τ_{kinematic} and the torsional twist *τₜₒᵣₛᵢₒₙ* may aid in accurate determination of the parasitic twist *τₜₒₜₐₗ* in the one or more portions 126 of the continuum robot 102.

For each vertebra 114 or a combination of vertebrae 114 of the continuum robot 102, there exists the kinematic twist τ_{kinematic} that is exacerbated over other vertebrae 114.

The controller 110 is further configured to correct the measured position of the continuum robot 102 based on the determined parasitic twist *τₜₒₜₐₗ* in the one or more portions 126 of the continuum robot 102.

The equations and processing that can be used to determine the parasitic twist *τₜₒₜₐₗ* will now be explained.
a) Calculation of the kinematic twist τ_{kinematic} from Piecewise Constant Curvature (PCC):
   For the continuum robot 102, PCC kinematics provides for the calculation of position and orientation of the continuum robot 102 from bending angles *ϕⱼ,* θⱼ of the continuum robot 102. Under PCC assumptions, deformation of the portion 126 (the vertebra 114 or multiple vertebrae 114) can be represented by:
   1. Rotation around the Z-axis by angle *ϕⱼ*, where j is the subscript assigned to the portion 126
   2. Bending about the Y-axis by angle *θⱼ = κⱼLⱼ*
   3. Rotation back about the Z-axis by angle -*ϕⱼ*

In rotation representation form: ${R}_{j} = {R}_{z} \left({ϕ}_{j}\right) {R}_{y} \left({θ}_{j}\right) {R}_{z} \left(-{ϕ}_{j}\right)$

Here, *R_{z}*(*ϕⱼ*) is a rotation about the Z-axis by angle *ϕⱼ, R_{z}*(*-ϕⱼ*) is a rotation about the Z-axis by angle-*ϕⱼ* and *R_{y}*(*θⱼ*) is a rotation around the Y-axis by *θⱼ.*

Further combining multiple sections for the continuum robot 102 with the total number N of vertebrae 114, the overall rotation R from the reference point 124 to the tip 122 is: $R = {\prod }_{1}^{N} {R}_{j} = {R}_{1} {R}_{2} … {R}_{N}$

Net rotation is calculated using Euler angle decomposition (Z-Y-Z). Let: $R = {R}_{z} \left(α\right) {R}_{y} \left(β\right) {R}_{z} \left(γ\right)$ ${τ}_{kinematic} = α + γ$

Here, sum of angles α and γ (i.e., α+γ) is equivalent to the kinematic twist τ_{kinematic} of the continuum robot 102.

b) Calculation of the torsion twist *Tₜₒᵣₛᵢₒₙₐₗ* due to torsion from moments on the tendons 116:
Net-twisting moment *Mₜ* about an axis of the backbone 112 is sum of moments *M_{t,i}* from each tendon 116: ${M}_{t} = {\sum }_{i = 1}^{n} {M}_{t , i}$

Here, i is a subscript assigned for each tendon 116.

For each tendon 116: ${M}_{t , i} = {T}_{i} ⋅ r ⋅ sin \left({θ}_{i}\right)$

Here: ${T}_{i} = {kδl}_{i}$

The tension *Tᵢ* in each tendon 116, is proportional to a change in length *δlᵢ* of corresponding tendon 116. In some examples, the change in the length *δlᵢ* of the tendon 116 may be computed based on the change in the length L of the continuum robot 102. The stiffness coefficient *k* is replaced by *kᵢ* while use of varying cables in the continuum robot 102. Here, *r* is the radial distance from the backbone 112 to the tendon 116, and *θᵢ* is the angular position of the tendon 116.

Any external/internal forces and other torques, if present, can also be integrated into the torsion equation.

Substituting *Tᵢ*: ${M}_{t} = {\sum }_{i = 1}^{n} {kδl}_{i} ⋅ r ⋅ sin \left({θ}_{i}\right)$

The torsional twist *τₜₒᵣₛᵢₒₙₐₗ* per unit length is related to the twisting moment Mt by the torsional rigidity *GJ* of the backbone 112. ${M}_{t} = GJ ⋅ {τ}_{torsional}$

Solving for the torsional twist *τₜₒᵣₛᵢₒₙₐₗ:* ${τ}_{torsional} = \frac{{M}_{t}}{GJ} = \frac{1}{GJ} {\sum }_{i = 1}^{n} {kδl}_{i} ⋅ r ⋅ sin \left({θ}_{i}\right)$

For constant stiffness coefficient *k,* the torsional twist *τₜₒᵣₛᵢₒₙₐₗ* per unit length: ${τ}_{torsional} = \frac{kr}{GJ} {\sum }_{i = 1}^{n} {δl}_{i} ⋅ sin \left({θ}_{i}\right)$

Here, the torsional twist *τₜₒᵣₛᵢₒₙₐₗ*per unit length is expressed in radians per unit length, the stiffness coefficient k is replaced by *kᵢ* while using varying cables in the continuum robot 102, r is the radial distance to the tendons 116 from the backbone, *GJ* is the torsional rigidity of the backbone 112, *δli* is the change in the length of the tendons 116, θᵢ is the angular position of the tendon 116, and n is the number of the tendons 116.

Further the torsional twist *τₜₒᵣₛᵢₒₙₐₗ* as a function of the length L of the continuum robot 102: ${τ}_{torsional} \left(L\right) = \frac{Lkr}{GJ} {\sum }_{i = 1}^{n} {δl}_{i} ⋅ sin \left({θ}_{i}\right)$

The parasitic twist *τₜₒₜₐₗ* experienced by the continuum robot 102, and the first sensor 106 over the length L is: ${τ}_{total} \left(L\right) = {τ}_{kinematic} \left(L\right) + {τ}_{torsional} \left(L\right)$

The parasitic twist τₜₒₜₐₗ can be packaged into a software module that accepts parameters of the continuum robot 102. The software module may be associated with the controller 110 and may operate for many of the tendon driven robots. Alternatively, the parasitic twist *τₜₒₜₐₗ* can be computed by a user based on receipt of information from the first sensor 106, the second sensor 108, and also a know-how of the other parameters that are needed to determine the parasitic twist τₜₒₜₐₗ.

In the illustrated embodiment of FIGS. 2 to 4, *τ*₁ is the parasitic twist *τₜₒₜₐₗ* across leftmost portion 126, *τ₂* is the parasitic twist *τₜₒₜₐₗ* across middle portion 126, and *τ*₃ is the parasitic twist *τ_{totαl}* across rightmost portion 126 of the continuum robot 102.

c) Analytical correction of the orientation of the first sensor 106.

To compensate the effect of the parasitic twists *τₜₒₜₐₗ* on the orientation of the first sensor 106, one can axially rotate the outputted position readings from the first sensor 106 by *α_{corrected}*, axially. ${τ}_{corrected} = - {τ}_{total}$

Alternatively, a map of *τ_{corrected}* can be made along the length L of the continuum robot 102, by multiplying *τ*, by a finite series of arc lengths along the continuum robot 102.

This would give the new readings for the orientation of the first sensor 106 as: ${X}_{corrected} = {X}_{FBG} cos \left({τ}_{corrected}\right)$ ${Y}_{corrected} = {Y}_{FBG} sin \left({τ}_{corrected}\right)$ ${Z}_{corrected} = {Z}_{FBG}$

In some embodiments, instead of assuming a uniform torsional rigidity GJ along the length L of the continuum robot 102, the continuum robot 102 may have different torsional stiffness properties across different portions 126 due to manufacturing variations, material choice, etc. The above equations may be accordingly updated to consider an effect of different torsional rigidity GJ. Further, the above equations assume a linear stiffness. However, the equations can be extended for nonlinear relationships to improve accuracy where tendons 116 exhibit complex mechanical behaviour under load. Moreover, the equations may be updated to consider the effects of external/internal forces and torques on the continuum robot 102. Further, the parasitic twist *τ*ₜₒₜₐₗ and the correction of the measured position of the continuum robot 102 can be performed by treating the continuum robot 102 as a single monolith structure, by decoupling it to a section-by-section computation, or it can be further decoupled using different kinematic equations to a vertebra-by-vertebra computation. This modularity can be advantageous in mixing and matching different sections or different types of the tendons 116.

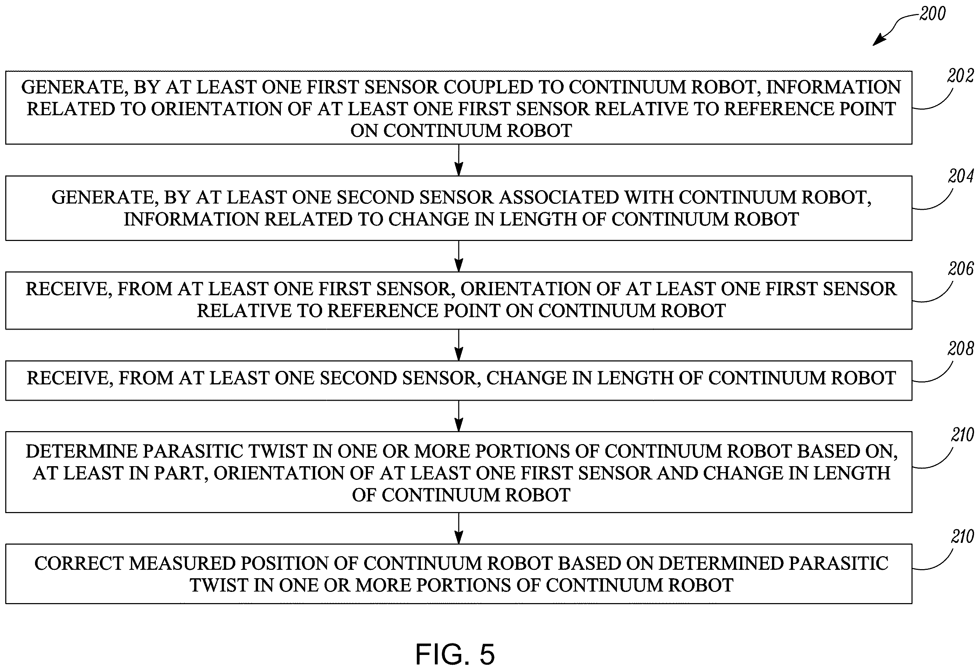

**FIG. 5** shows a flowchart of a method 200 of correcting the measured position of the continuum robot 102 whilst inspecting or repairing the component 104, in accordance with an embodiment of the present invention. The method 200 will be described with further reference to FIGS. 1 to 5.

At step 202, the method 200 includes generating, by the at least one first sensor 106 coupled to the continuum robot 102, information related to the orientation of the at least one first sensor 106 relative to the reference point 124 on the continuum robot 102.

At step 204, the method 200 further includes generating, by the at least one second sensor 108 associated with the continuum robot 102, information related to the change in the length L of the continuum robot 102.

At step 206, the method 200 further includes receiving, from the at least one first sensor 106, the orientation of the at least one first sensor 106 relative to the reference point 124 on the continuum robot 102.

At step 208, the method 200 further includes receiving, from the at least one second sensor 108, the change in the length L of the continuum robot 102.

At step 210, the method 200 further includes determining the parasitic twist *τₜₒₜₐₗ* in the one or more portions 126 of the continuum robot 102 based on, at least in part, the orientation of the at least one first sensor 106 and the change in the length L of the continuum robot 102.

At step 212, the method 200 further includes correcting the measured position of the continuum robot 102 based on the determined parasitic twist *τ*ₜₒₜₐₗ in the one or more portions 126 of the continuum robot 102.

In some embodiments, the method 200 further includes a step of analytically correcting the orientation of the at least one first sensor 106 based on the determined parasitic twist *τₜₒₜₐₗ* in the one or more portions 126 of the continuum robot 102.

In some embodiments, the method 200 further includes a step of determining the position of the tip 122 of the continuum robot 102 based on, at least in part, the orientation of the at least one first sensor 106.

In some embodiments, the at least one first sensor 106 includes the FBG sensor or the IMU.

In some embodiments, the determined parasitic twist *τ*ₜₒₜₐₗ includes the combination of the kinematic twist *τ_{kinematic},* s and the torsional twist *τₜₒᵣₛᵢₒₙ*.

In some embodiments, the method 200 further includes a step of determining the parasitic twist *τₜₒₜₐₗ* in the one or more portions 126 of the continuum robot 102 based on, at least in part, the stiffness coefficient k of the plurality of tendons 116, the radial distance r of the plurality of tendons 116 from the backbone 112, the torsional rigidity GJ of the plurality of tendons 116, the angular position θ of the plurality of tendons 116, and the total number n of the plurality of tendons 116.

The system 100 and the method 200 is used to correct the measured position of the continuum robot 102 based on analytical determination of the parasitic twist *τₜₒₜₐₗ* in the one or more portions 126 of the continuum robot 102 based on the change in the length L of the continuum robot 102 and the change in an orientation of the first sensor 106. The system 100 and the method 200 determines the parasitic twist *τₜₒₜₐₗ* and corrects the measured position of the continuum robot 102 without the need of a complex, or data-driven method, thereby enabling repeatability and robustness. The system 100 and the method 200 may be used for tendon-driven continuum robots 102 that are subjected to parasitic twist *τₜₒₜₐₗ* during the repair or inspection of the component 104. The system 100 and the method 200 may also be used for active continuum robots 102 possessing no random passive section, such as Continuum Robot for Flexible Operations (COBRA) robot. The system 100 and the method 200 may operate in real-time during the repair or inspection of the component 104 and may allow monitoring and optimizing of the repair operation being performed on the component 104, such as those associated with gas turbine engines 10.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A system (100) for correcting a measured position of a continuum robot (102) whilst inspecting or repairing a component (104), the system (100) comprising:
at least one first sensor (106) coupled to the continuum robot (102), the at least one first sensor (106) being configured to generate information related to an orientation of the at least one first sensor (106) relative to a reference point (124) on the continuum robot (102);
at least one second sensor (108) associated with the continuum robot (102), the at least one second sensor (108) being configured to generate information related to a change in a length (L) of the continuum robot (102); and
a controller (110) communicably coupled with the continuum robot (102), the at least one first sensor (106) and the at least one second sensor (108), wherein the controller (110) is configured to:
receive, from the at least one first sensor (106), the orientation of the at least one first sensor (106) relative to the reference point (124) on the continuum robot (102);
receive, from the at least one second sensor (108), the change in the length (L) of the continuum robot (102);
determine a parasitic twist (*τₜₒₜₐₗ*) in one or more portions (126) of the continuum robot (102) based on, at least in part, the orientation of the at least one first sensor (106) and the change in the length (L) of the continuum robot (102); and
correct the measured position of the continuum robot (102) based on the determined parasitic twist ( *τₜₒₜₐₗ*) in the one or more portions (126) of the continuum robot (102).

2. The system (100) of claim 1, wherein the controller (110) is further configured to analytically correct the orientation of the at least one first sensor (106) based on the determined parasitic twist ( *τₜₒₜₐₗ*) in the one or more portions (126) of the continuum robot (102).

3. The system (100) of claim 1 or 2, wherein the orientation of the at least one first sensor (106) includes a position of the at least one first sensor (106) along each of an X-axis, a Y-axis, and a Z-axis defined by the continuum robot (102).

4. The system (100) of any preceding claim, wherein the controller (110) is further configured to determine a position of a tip (122) of the continuum robot (102) based on, at least in part, the orientation of the at least one first sensor (106).

5. The system (100) of any preceding claim, wherein the determined parasitic twist (*τₜₒₜₐₗ*) includes a combination of a kinematic twist (*τ_{kinematic}*) and a torsional twist (*τ_torsion*)*.*

6. The system (100) of any preceding claim, wherein the at least one first sensor (106) includes a Fibre Bragg grating (FBG) sensor.

7. The system (100) of any one of claims 1 to 5, wherein the at least one first sensor (106) includes a plurality of first sensors (106), the plurality of first sensors (106) being axially spaced apart from each other along the length (L) of the continuum robot (102), optionally each of the plurality of first sensors (106) including an inertial measurement unit.

8. The system (100) of any preceding claim, wherein the at least one second sensor (108) includes a linear encoder or a load cell; and/or the at least one second sensor (108) is coupled to a drive system (118) of the continuum robot (102).

9. The system (100) of any preceding claim, wherein the continuum robot (102) includes a backbone (112) having a plurality of vertebrae (114) and a plurality of tendons (116) circumferentially arranged around the backbone (112) at various angular positions (θ), the at least one first sensor (106) being disposed proximal to the backbone (112) of the continuum robot (102).

10. The system (100) of claim 9, wherein the controller (110) is further configured to determine the parasitic twist (*τₜₒₜₐₗ*) in the one or more portions (126) of the continuum robot (102) based on, at least in part, a stiffness coefficient (k) of the plurality of tendons (116), a radial distance (r) of the plurality of tendons (116) from the backbone (112), a torsional rigidity (GJ) of the plurality of tendons (116), an angular position (θ) of the plurality of tendons (116), and a total number (n) of the plurality of tendons (116).

11. The system (100) of claim 9 or 10, wherein the reference point (124) is defined at the backbone (112) of the continuum robot (102).

12. The system (100) of any preceding claim, wherein the component (104) is a gas turbine engine component (104).

13. A method (200) of correcting a measured position of a continuum robot (102) whilst inspecting or repairing a component (104), the method (200) comprising the steps of:
generating, by at least one first sensor (106) coupled to the continuum robot (102), information related to an orientation of the at least one first sensor (106) relative to a reference point (124) on the continuum robot (102);
generating, by at least one second sensor (108) associated with the continuum robot (102), information related to a change in a length (L) of the continuum robot (102);
receiving, from the at least one first sensor (106), the orientation of the at least one first sensor (106) relative to the reference point (124) on the continuum robot (102);
receiving, from the at least one second sensor (108), the change in the length (L) of the continuum robot (102);
determining a parasitic twist ( *τₜₒₜₐₗ*) in one or more portions (126) of the continuum robot (102) based on, at least in part, the orientation of the at least one first sensor (106) and the change in the length (L) of the continuum robot (102); and
correcting the measured position of the continuum robot (102) based on the determined parasitic twist ( *τₜₒₜₐₗ*) in the one or more portions (126) of the continuum robot (102).

14. The method (200) of claim 13, further comprising analytically correcting the orientation of the at least one first sensor (106) based on the determined parasitic twist (*τₜₒₜₐₗ*) in the one or more portions (126) of the continuum robot (102).

15. The method (200) of claim 13 or 14, further comprising determining a position of a tip (122) of the continuum robot (102) based on, at least in part, the orientation of the at least one first sensor (106).
